# EUROPÄISCHE PATENTSCHRIFT

(11) **EP 0 560 750 B1**
(45) Veröffentlichungstag und Bekanntmachung des Hinweises auf die Patenterteilung: **10.04.1996**
(21) Anmeldenummer: 93890033.9
(22) Anmeldetag: 02.03.1993
(51) Int. Cl.: B60Q 1/00

(54) **Fahrzeugbeleuchtungssystem**
Vehicle lighting system
Système d'éclairage de véhicule

(30) Priorität: 09.03.1992 AT 448/92
(43) Veröffentlichungstag der Anmeldung: 15.09.1993
(73) Patentinhaber: Zizala Lichtsysteme GmbH, A-3250 Wieselburg (AT)
(72) Erfinder: Krammer, Gert, A-8020 Graz (AT)
(74) Vertreter: Collin, Hans, Dipl.-Ing. Dr.

(56) Entgegenhaltungen:
- DE-A- 2 029 317
- FR-A- 2 642 819
- GB-A- 1 217 092
- US-A- 4 786 127

## Beschreibung

Die Erfindung betrifft ein Fahrzeugbeleuchtungssystem mit zentraler Lichterzeugereinheit und Lichtleitfaserbündeln zum Lichttransport zu Beleuchtungskörpern.

Derartige Systeme sind z.B. aus der DE-OS 38 38 770 bekannt. Bei den dort beschriebenen bekannten Systemen sind jeweils eine Lichtquelle hoher Intensität, die auch eine Gasentladungslampe sein kann und die bei Einschaltung dauernd brennt, und ein Reflektor gegenüber einem Lichtleiterbündel angeordnet, auf das die Lichtstrahlen projiziert werden und das Licht zu optischen Elementen, wie Linsen, weiterleitet, die die eigentlichen Beleuchtungskörper bilden, von denen an die Umgebung gezielt abgestrahlt wird.

Diese Systeme weisen u.a. folgende Nachteile auf: Einer Dauerlichtquelle ist eine Reihe von Lichtleiterbündeln fix zugeordnet, die jeweils gleichzeitig angestrahlt werden. Das hat zur Folge, daß nicht benötigte Beleuchtungskörper abgeschattet werden müssen (Energievergeudung) und es nicht möglich ist, voneinander unabhängig leuchtende Beleuchtungskörper mit einem System zu erfassen. Weiterhin ist der Dauerbetrieb von Lichtquellen mit einer hohen Wärmeentwicklung verbunden; die Lampen müssen bei den bekannten Systemen auch eine sehr hohe Lichtleistung aufweisen, da sämtliche "Lichtkanäle" gleichzeitig angestrahlt werden. Bei Ausfall der Lampe ist das ganze System funktionslos.

Es bestand die Aufgabe, Beleuchtungssysteme dieser generellen Art zu schaffen, die aber frei von den Nachteilen des Standes der Technik sind.

Grundsätzlich wird erfindungsgemäß vorgesehen, daß im System mindestens eine, vorzugsweise mindestens zwei, intermittierend leuchtende Lichtquellen rotierend angeordnet sind. Damit können die gesteuerten Lichtquellen an den anzustrahlenden Lichtleitkanälen vorbeigeführt werden, so daß praktisch die ganze Lichtenergie der Lichtquelle kurzfristig jeweils einem Lichtleitkanal zur Verfügung gestellt werden kann (Reflektorbündelung). Die Lichtkanäle sind kranzförmig, vorzugsweise in gleichen Abständen voneinander, um die rotierende(n) Lichtquelle(n) herum angeordnet und die Lichtquellenanzahl, Umdrehungszahl und Lichtleitkanalanzahl werden aufeinander abgestimmt mit der Maßgabe, daß für das menschliche Auge eine intermittierende Lichtabgabe dann als Dauerlicht erscheint, wenn die Abgabefrequenz >50 Hz. Hier ist zu beachten, daß es bei einer Fahrzeugbeleuchtung natürlich nicht nur darum geht, daß die Lichtquelle mit Dauerlicht gesehen, sondern auch, daß bewegte Ziele wie Landschaft, Fahrzeuge etc. mit Dauerlicht erleuchtet werden müssen, d.h. der Fahrer des leuchtenden Fahrzeugs diese Gegenstände als kontinuierlich bestrahlt sieht.

Ohne an diese Frequenzangabe gebunden zu sein, wird derzeit angenommen, daß eine Lichtabgabefrequenz von >100 Hz auch für schnelle Kraftfahrzeuge ausreichend sein wird, bei Luftfahrzeugen könnte die Frequenz auch höher sein.

Erfindungsgemäß wird somit vor allem vorgeschlagen, um eine Achse rotierende Lichtquellen mit korrespondierenden Lichtleitkanalkränzen vorzusehen, wobei an einem Rotor auch mehrere derartiger Lichtetagen vorgesehen sein können.

Ein weiteres Kennzeichen der Erfindung ist, anstelle von Dauerlichtlampen Gasentladungsblitzlampen (z.B. Xenonröhren), die vorzugsweise selbstzündend oder für den Simmerbetrieb gut geeignet sind, einzusetzen, da die einzelnen Lichtleitkanäle infolge des Vorbeiführens der Lampen ohnedies nur intermittierend bestrahlt werden. Gasentladungsblitzlampen sind an sich handelsüblich und haben nach Lasern die höchste Leuchtdichte; sie arbeiten üblicherweise mit Entladungszeiten im Bereich von einigen µs bis einigen ms völlig verzögerungs- oder ermüdungsfrei, d.h. sie können praktisch beliebig rasch erneut abgefeuert werden, so daß es möglich ist, auch bei infolge einer großen Anzahl von Lichtleitkanälen nötigen hohen Lampenbewegungsgeschwindigkeiten jeden Lichtleitkanal lagepräzise hochenergetisch anzublitzen. Weitere im erfindungsgemäßen Beleuchtungssystem vorteilhaft einsetzbare Lichtquellen sind Halogengasentladungslampen mit Wendel und Laserdioden.

Aus einem dem Anmeldungsgegenstand fernliegenden Gebiet, nämlich der Beleuchtung von Gefäßbatterien für die Photosynthese, ist in der US-A 5,031,990 ein Beleuchtungssystem geoffenbart, bei dem vom Lichtabgabeende eines von einer feststehenden Permanentlichtquelle angespeisten Faseroptikkabels ein rotierender Lichtverteilerarm angespeist wird, dessen äußeres Lichtabgabeende an einem Kranz Faseroptikkabel entlang rotiert, die das Licht den einzelnen Gefäßen zurühren. Dazu wird entweder der Lichtverteilerarm zentral angespeist und das Licht in diesem Arm zweimal umgelenkt, oder das Ende des Faseroptikkabels am Ende des Lichtverteilerarms verdrehbar angesetzt und das Licht durchstrahlt mehr oder weniger abgelenkt einen plattenförmigen Lichtkuppler am Ende des Lichtverteilerarms, der mehrere Faseroptikkabel gleichzeitig beleuchtet.

Erfindungsgemäß besteht der zentrale "Lichtgenerator" somit aus mindestens einer, in der Regel mindestens zwei, und bevorzugt mehreren Lichtquellen, vor allem Gasentladungsblitzlampen, die um eine Achse rotieren und an den Stirnflächen von korrespondierenden, vorzugsweise entlang eines Kreisumfangs angeordneten Lichtleitkanälen vorbeigeführt werden, die aus Lichtleitfasern bestehen und zu den einzelnen "Beleuchtungskörpern" am Fahrzeug führen.

Die Lichtquellen sind somit Teil eines Rotors, der vorzugsweise auch der Läufer eines berührungslos gespeisten Elektromotors, insbesondere eines Gleichstrommotors mit elektronischer Kommutierung ist.

Derartige Motoren sind bekannt und haben eine sehr hohe Standzeit (∼ 80.000 h) auch bei hoher Umdrehungszahl, z.B. zwischen 2000 und 6000 UpM; ihre Standzeit ist praktisch nur lagerungsabhängig, so daß mit einem störungsfreien Dauerbetrieb von mindestens 5 Jahren gerechnet werden kann.

Dabei ist vorgesehen, daß ein Teil des Rotors als Teil eines übertragers zur Zuführung elektrischer Energie zu den Blitzlampen ausgebildet ist, wobei die Primärwicklungen am Stator und die Sekundärwicklungen am Rotor und Stator angeordnet sind. Auf diese Weise können auch die einzelnen Lichtquellen am Rotor völlig berührungsfrei und daher verschleißarm angesteuert werden.

Die Wicklungen an Rotor und Stator können auf mehrere korrespondierende Ringnuten aufgeteilt und insbesondere am Rotor mehrere Sekundärwicklungen vorgesehen sein.

Die Abfeuerung der Blitzlampen erfolgt vorteilhaft über bekannte Halbleiterleistungsschalter, insbesondere äußerst widerstandsarme Feldeffektleistungsschalter oder Leistungstransistoren, so daß nur geringe Erwärmung dieser Bauteile auftritt.

Die Erfindung wird nachfolgend unter Bezugnahme auf die Zeichnung beispielsweise näher beschrieben, in der Fig. 1 schematisch die Anordnung rotierender Lichtquellen innerhalb eines Kranzes von aus Lichtleitfaserbündeln gebildeten Lichtleitkanälen zeigt; Fig. 2 ist eine Teilschnittansicht eines Lichtgenerators auf Basis eines berührungslos kommutierten Elektromotors und Fig. 3 ein entsprechendes Blockschaltbild dieses Generators. Fig. 4 ist eine schaubildliche Ansicht eines ähnlichen Lichtgenerators.

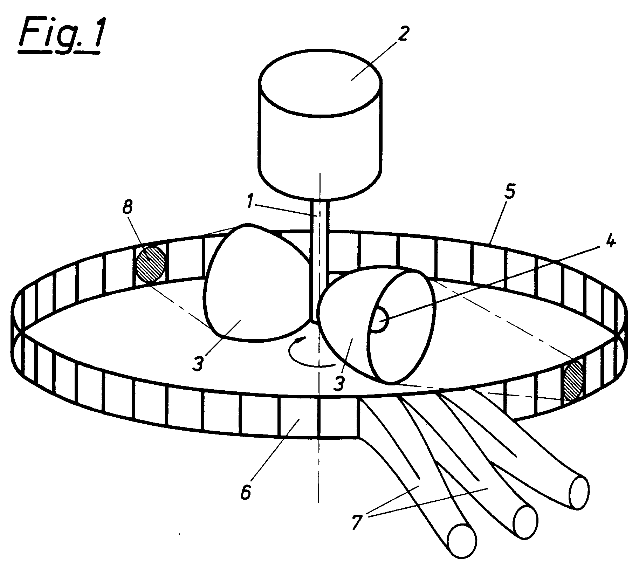

Aus Fig. 1 erkennt man, daß zwei einander diametral gegenüberstehende, auf der Rotorwelle 1 eines Antriebsmotors 2 angeordnete und mit Reflektoren 3 versehene Lichtquellen 4 innerhalb eines Kranzes 5, der aus den Stirnflächen 6 von Lichtleitkanäle 7 bildenden Lichtleitfaserbündeln gebildet ist, umlaufen, wobei die Reflektoren kreisförmige Lichtflecke 8 auf die Stirnflächen 6 projizieren. Beide Lichtquellen 4 sind dabei in Betrieb; bei Ausfall einer davon könnte die Motordrehzahl auf das Doppelte erhöht werden. Anderseits ist es auch möglich, Lichtquellen verschiedener Leistung zur gezielten Versorgung von Beleuchtungskörpern einzusetzen, die unterschiedliche Lichtmengen und -intensitäten abstrahlen sollen.

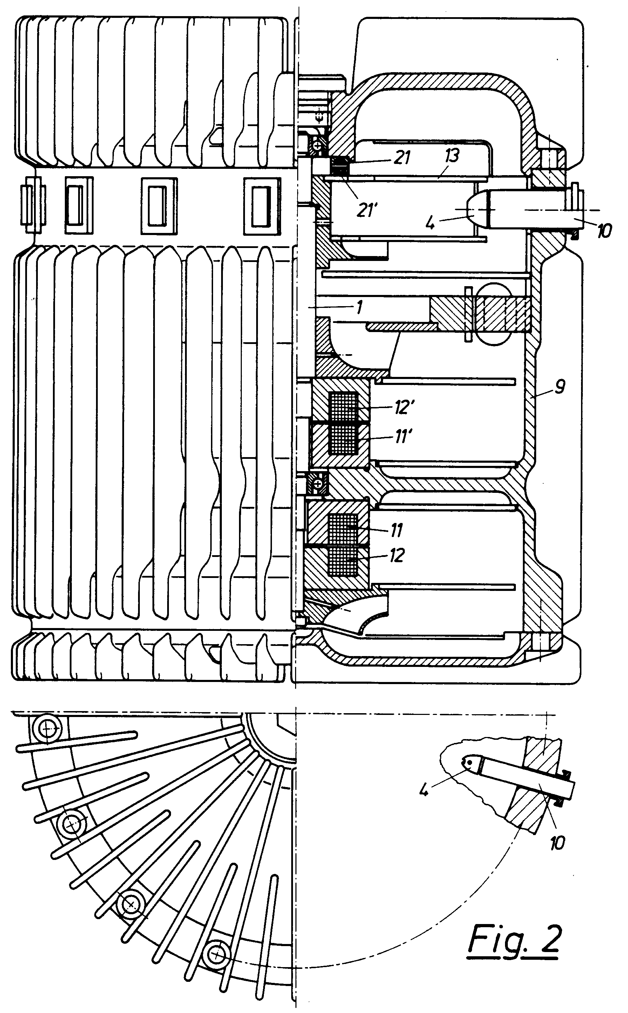

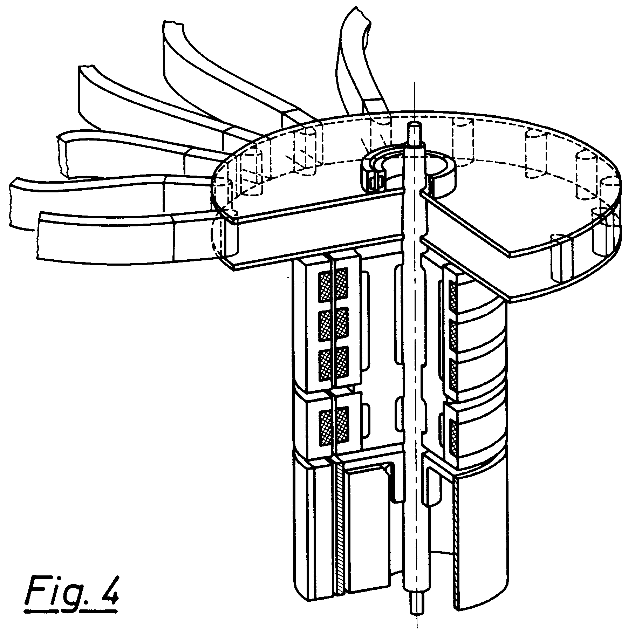

Aus Fig. 2 ist ein elektronisch kommutierter Gleichstrommotor 2 zu erkennen, auf dessen Stator 9 Lichtdurchführungen 10 angeordnet sind, an die radial nach außen nicht dargestellte Lichtleitkanäle anschließen. Der Stator 9 trägt weiterhin zwei Primärwicklungen 11,11', die mit Sekundärwicklungen 12,12' am Rotor korrespondieren, die fest mit der Rotorwelle 1 verbunden sind. Man erkennt, daß Axialspalte zwischen den Wicklungen vorgesehen sind; es ist aber auch möglich und kann sogar günstiger sein, eine Radialteilung zwischen Primär- und Sekundärseite vorzusehen, da dann die infolge der elektrischen Spaltkräfte auftretenden Lagerkräfte geringer sind. Dies ist in Fig. 4 gezeigt.

Zum guten Ineinandergreifen zwischen primär- und Sekundärwicklungen ist es günstig, die Wicklungen auf einzelne Nuten zu verteilen mit gegensinniger Wicklungsrichtung benachbarter Nuten, damit der magnetische Fluß über die ringförmigen Stege zwischen den Nuten verläuft, wie aus Fig. 4 zu erkennen.

Mit der Rotorwelle 1 fest verbunden ist gemäß Fig. 2 weiterhin eine Lichtquellentragscheibe 13, auf der eine Anzahl außen verspiegelter Blitzlampen 4 so angeordnet ist, daß ihre peripheren Abstrahlflächen möglichst knapp an den Lichtdurchführungen 10 vorbeirotieren. Dazu ist es günstig, die Abstrahlflächen und die korrespondierenden Aufnahmeflächen der Lichtdurchführungen 10 abzurunden, so daß ein gleich breiter Spalt gebildet wird. Gleichzeitig ist die Tragscheibe 13 die Platine für zumindest einen Teil der Schaltung.

Die Blitzlampen 4 sind in gleichen Abständen entlang des Umfangs der Tragscheibe 13 angeordnet, die weiterhin eine Steuerübertragerhälfte 21' zur Übertragung von elektronischer Abfeuerinformation an die Blitzlampen 4 trägt, deren andere Hälfte 21 am Stator 9 angeordnet ist.

Das eine Wicklungspaar 11,11' betrifft einen Schaltnetzteil zur Energieübertragung an die Blitzlampen 4 (Übertragerleistung etwa 100 W), während das andere 12,12' einem Schaltnetzteil für den Motorantrieb und später erläuterten Zusatzfunktionen (Übertragerleistung etwa 30 W) zugehört, der aber auch die Blitzlampen notfalls mit Energie versorgen kann.

Schaltnetzteilschaltungen sind an sich bekannt; am geeignetsten erscheint ein Resonanzschaltnetzteil wegen der geringeren Streuverluste und der Möglichkeit, am Rotor und/oder Stator verschiedene Sekundärwicklungen anzuordnen.

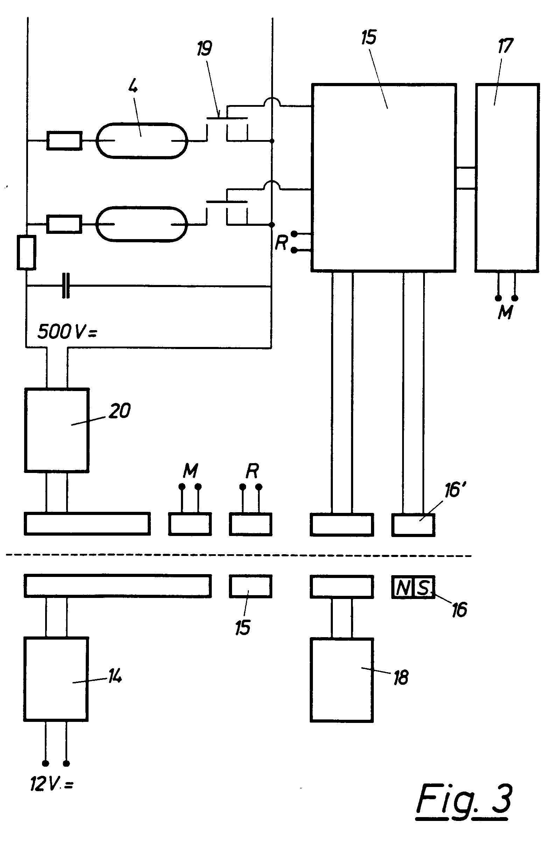

Fig. 3 zeigt eine schematische Schaltanordnung für einen Lichtgenerator in Form eines elektronisch kommutierten Gleichstrommotors, dessen Primärwicklung über einen Schaltregler 14 mit 12 V angespeist wird. Weiterhin erfolgt eine Energieeinspeisung 15' zum Betrieb einer Rechnereinheit 15 und zur Regelung des Motors. Am Umfang des Stators sind weiterhin Magnetmarken 16 angeordnet, die von einer korrespondierenden Lesespule mit C-Kern 16' am Rotor abgefühlt werden und die die Rotorstellung im Vergleich zum Stator anzeigen, so daß über den Verarbeitungsrechner 15 die Blitzlampen rechtzeitig gezündet werden. Dazu ist eine der Magnetmarken 16 am Stator im Vergleich zu den anderen umgekehrt gepolt und dient als Nullmarke. Der Motor läuft ohne Drehstellungskontrolle bis zu einer quarzstabilisierten Drehzahl an. Endlich erfolgt über den Stator über einen Steuerrechner 18 ein Informationseintrag auf den Rotor betreffend das abzugebende Licht, d.h. welches Fahrzeuglicht eingeschaltet ist. Der Verarbeitungsrechner 15 ist ein Mikroprozessor, der in Abhängigkeit von den übertragenen Daten die einzelnen Blitzlampen 4 über Leistungsschalter 19 zum richtigen Zeitpunkt abfeuert.

Es ist ersichtlich, daß der Übertragerausgang (Sekundärseite) etwa 500 V beträgt, wobei ein Sekundärschaltregler 20 vorgesehen ist und daß den Blitzlampen 4 eine Kapazität vorgeschaltet ist, in der der Kondensator etwa 20 µF hat. Je nach Ausführungsform kann jeder Blitzlampe ein LC-Glied vorgeschaltet sein. Die Blitzlampen 4 haben eine Leistung von etwa 6 W.

Das erfindungsgemäße Beleuchtungssystem kann alle Beleuchtungskörper am Fahrzeug, d.h. bei einem Kraftfahrzeug alles von der Armaturenbrettbeleuchtung bis zum Fernlicht, oder einen Teil davon, umfassen. Es kann vorgesehen sein, eine Lichtetage für Notfälle vorzusehen, d.h. eine normalerweise nicht betriebene Lichtquellen/Aufnahmekranzanordnung, die lediglich die für einen Fahrzeugbetrieb bis zur Werkstätte unbedingt nötigen Beleuchtungskörper speist.

Lichtleitkanäle in Form von Lichtleitfaserbündeln mit jeweils untereinander gleichen Lichtleitfasern verschiedener Querschnittsformen sind bekannt; die allgemein verwendete Form sind Fasern mit rundem Querschnitt, aber auch Kapillarenbündel und Bündel mit Fasern mit sechseckigem Querschnitt sind bekannt. Diese bekannten Bündel weisen großteils über ihren Querschnitt einen relativ hohen Anteil von Leerflächen auf, d.h. die Bereiche zwischen den einzelnen Fasern, wo keine Lichtweiterleitung erfolgt und die das Volumen des Bündels unnütz vergrößern.

Bei den erfindungsgemäßen Beleuchtungssystemen werden Folienpakete als Lichtleitkanäle bevorzugt; sie ergeben eine maximale Ausnutzung des Querschnitts bei guter Biegsamkeit.

Optische Schwachpunkte bei der Lichtübertragung mit Hilfe von Lichtleiterbündeln sind naturgemäß die Kopplungsstellen zwischen den Bündeln und den angrenzenden Elementen, z.B. den Abstrahllinsen. Erfindungsgemäß werden hiezu durchsichtige oder undurchsichtige Aufsteckmanschetten vorgesehen, die ein zentrales, sich an die Oberflächen der beiden zu verbindenden Bauteile elastisch anlegendes durchsichtiges Element, z.B. aus Silikonkautschuk, umschließen. Alternativ kann vorgesehen sein, in die Aufsteckmanschette vor dem Einstecken des zweiten Elements eine durchsichtige, selbsthärtende Masse einzubringen, vorzugsweise wiederum aus Silikonkautschuk.

Auch die Lichtleiterbündel werden vorzugsweise aus Kunststoffmaterialien gebildet, wobei auf möglichst geringe Temperaturbelastung von der Umgebung her zu achten ist. Dies kann z.B. durch schlecht wärmeleitende Überzüge auf den Lichtleiterbündeln sichergestellt werden.

Vorzugsweise kann weiterhin in bekannter Weise (US-PS 3 761 706) vorgesehen sein, von den einzelnen Beleuchtungskörpern Lichtleitfaserbündel zu einer Anzeigetafel (Armaturenbrett) ins Wageninnere zu führen.

Die mit dem erfindungsgemäßen Beleuchtungssystem erzielbaren Vorteile lassen sich kurz wie folgt zusammenfassen:
genaue Lichtübertragung von den Lichtquellen zu den Lichtleitern;
höhere Ausfallsicherheit der Lichtquelle durch mehrere Lichtquellen;
Energiesteuerung und damit Lichtstromsteuerung;
variable Farbwahl durch verschiedenfärbige Lichtquellen;
direkte Anzeige der Lichtströme durch Anzapfung mit Lichtleitern;
die Zündzeitpunktsteuerung ermöglicht in Zusammenhang mit geordneten Lichtleitern eine Leuchtenweitenregulierung.

## Patentansprüche

1. Fahrzeugbeleuchtungssystem mit zentraler Lichterzeugereinheit und Lichtleitfaserbündeln zum Lichttransport zu Beleuchtungskörpern, dadurch gekennzeichnet, daß in der zentralen Lichterzeugereinheit eine oder vorzugsweise mehrere, im Betrieb um eine Achse rotierende, intermittierend leuchtende Lichtquelle(n) vorgesehen ist (sind).

2. Beleuchtungssystem nach Anspruch 1, dadurch gekennzeichnet, daß die Lichtquelle eine kurzzeitsteuerbare Lichtquelle ist, z.B. eine vorzugsweise selbstzündende Gasentladungslampe, eine Halogengasentladungslampe mit Wendel oder eine Laserdiode.

3. Beleuchtungssystem nach Anspruch 1 oder 2, dadurch gekennzeichnet, daß Lichtquellen zur Abgabe von Licht gleicher oder verschiedener Farbe vorgesehen sind.

4. Beleuchtungssystem nach einem der Ansprüche 1 bis 3, dadurch gekennzeichnet, daß am Umfang eines Rotors in vorzugsweise gleichen Abständen voneinander angeordnete Lichtquellen, jeweils in einer oder mehreren im rechten Winkel zur Rotorachse stehenden Ebene(n) vorgesehen sind.

5. Beleuchtungssystem nach Anspruch 4, dadurch gekennzeichnet, daß ein Rotor mit durch Bürsten und Schleifringe oder vorzugsweise berührungslos induktiv erfolgender Energieversorgung vorgesehen ist.

6. Beleuchtungssystem nach Anspruch 5, dadurch gekennzeichnet, daß ein Rotor mit berührungslos induktiver Energieversorgung durch einen verdrehbar geteilten Übertragerkern eines Schaltnetzteils, wobei die Primärwicklung am Stator und die Sekundärwicklungen am rotierenden Übertragerteil angeordnet sind, vorgesehen ist.

7. Beleuchtungssystem nach Anspruch 6, dadurch gekennzeichnet, daß ein Rotor mit auf mehrere korrespondierende Ringnuten aufgeteilten Wicklungen vorgesehen ist.

8. Beleuchtungssystem nach Anspruch 5, dadurch gekennzeichnet, daß ein Rotor mit einem Antrieb durch einen Elektromotor, insbesondere einen Gleichstrommotor mit elektronisch kommutierter Läuferwicklung auf dem Rotor, der die Lichtquellen trägt, vorgesehen ist.

9. Beleuchtungssystem nach einem der Ansprüche 2 bis 8, dadurch gekennzeichnet, daß zur Ansteuerung der Lampen Halbleiterleistungsschalter, z.B. Transistoren oder Feldeffekttransistoren, vorgesehen sind.

10. Beleuchtungssystem nach einem der Ansprüche 2 bis 9, dadurch gekennzeichnet, daß ein oder mehrere Prozeßrechner zur Steuerung des Systems vorgesehen sind.

## Claims

1. A vehicle lighting system having a central light producing unit and bundles of optical fibers for the transport of light to lighting fixtures, characterized in that one or preferably several pulsatingly emitting light source(s) rotating about an axis during operation is/are provided within the central light producing unit.

2. A lighting system according to claim 1, characterized in that the source of light is a short-term controllable source of light, for instance a preferably spontaneously igniting gas discharge lamp, a halogen gas discharge lamp with filament, or a laser diode.

3. A lighting system according to claim 1 or claim 2, characterized in that the source of light is provided for emitting light of identical or different color.

4. A lighting system according to any of claims 1 to 3, characterized in that light sources are preferably equally spaced from each other along the periphery of a rotor in one or several plane(s) forming a right angle with the rotor axis

5. A lighting system according to claim 4, characterized in that provision is made for a rotor energized by means of brushes and collector rings or preferentially non-contact induction.

6. A lighting system according to claim 5, characterized in that provision is made for a rotor energized by non-contact induction by means of a subdivided transformer core of a mains supply circuit, said core being subdivided to allow for rotation, the primary winding being disposed at the stator and the secondary windings at the rotating part of the transformer.

7. A lighting system according to claim 6, characterized in that provision is made for a rotor having windings distributed over several corresponding ring grooves.

8. A lighting system according to claim 5, characterized in that provision is made for a rotor driven by an electric motor, in particular a d.c. motor with an electronically commutated rotor winding on the rotor carrying the source of light.

9. A lighting system according to any of claims 2 to 8, characterized in that semiconductor power switches, for instance transistors or field effect transistors, are provided for energizing the lamps.

10. A lighting system according to any of claims 2 to 9, characterized in that one or several process computer(s) is/are provided for controlling the system.

## Revendications

1. Système d'éclairage pour véhicule avec unité photogène centrale et avec faisceaux de fibres optiques pour transporter de la lumières à des armatures d'éclairage, caractérisé en ce qu'une ou plusieurs source(s) de lumière émettant de la lumière de façon pulsante, en action tournant autour d'un axe, est/sont disposée(s) dans l'unité photogène centrale.

2. Système d'éclairage selon la revendication 1, caractérisé en ce que la source de lumière est une source de lumière gouvernable à court temps, par exemple une lampe luminescente à gaz préférablement à ignition spontanée, une lampe luminescente à gaz halogène avec filament ou une diode laser.

3. Système d'éclairage selon la revendication 1 ou 2, caractérisé en ce que des sources de lumière pour l'émission de lumière de couleur identique ou differente sont prévues.

4. Système d'éclairage selon l'une des revendications 1 à 3, caractérisé en ce que des sources de lumière placées préférablement à des intervalles égaux sur la périphérie d'un rotor, respectivement en un ou plusieurs plans en angle droit à l'axe de rotor.

5. Système d'éclairage selon la revendication 4, caractérisé en ce qu'un rotor alimenté d'énergie par des brosses et bagues collectrices ou préférablement de façon inductive sans contact est prévu.

6. Système d'éclairage selon la revendication 5, caractérisé en ce qu'un rotor alimenté d'énergie de façon inductive sans contact par voie d'un noyau de transformateur divisé d'un bloc d'alimentation, le noyau étant divisé pour permettre une rotation, est prévu, le circuit primaire étant disposé sur le stator et le secondaire étant disposé sur l'élément transformateur tournant.

7. Système d'éclairage selon la revendication 6, caractérisé en ce qu'un rotor avec des bobines réparties entre plusieurs rainures annulaires est prévu.

8. Système d'éclairage selon la revendication 5, caractérisé en ce qu'un rotor actionné par un moteur électrique, en particulier un moteur à courant continu avec enroulement rotorique dont la commutation est faite de façon électronique, est prévu sur le rotor portant la source de lumière.

9. Système d'éclairage selon l'une des revendications 2 à 8, caractérisé en ce que des semiconducteurs à sectionneurs de puissance, par exemple des transistors ou des transistors à effet de champ, sont prévus pour l'excitation des lampes.

10. Système d'éclairage selon l'une des revendications 2 à 9, caractérisé en ce qu'un ou plusieurs calculateur(s) industriel(s) est/sont prévu(s) pour le réglage du système.
